# EUROPEAN PATENT APPLICATION

(11) **EP 3 860 289 A1**
(43) Date of publication of application: **04.08.2021**
(21) Application number: 21152271.9
(22) Date of filing: 19.01.2021
(51) Int. Cl.: H04W 72/12, H04L 1/18, H04W 72/14

(54) **FLEXIBLE DATA TRANSMISSION METHODS CONSIDERING CONFIGURED GRANT TIMERS**

(30) Priority: 30.01.2020 US 202062967844 P
(71) Applicant: Nokia Technologies Oy, 02610 Espoo (FI)
(72) Inventor: KUO, Ping-Heng, London, NW71GX (GB); KOZIOL, Dawid, 52-016 Wroclaw (PL)
(74) Representative: Nokia EPO representatives

(57) **Abstract**

Apparatuses and methods for flexible data transmission considering configured grant (CG) timers are provided. One method may include receiving at least one configuration from at least one network entity. The method may further include evaluating at least one received uplink grant against at least one criterion associated with the at least one configuration. The method may further include selecting at least one configured grant timer value based on the at least one evaluation.

## Description

### BACKGROUND:

### Field:

Various communication systems may benefit from mechanisms relating to configured grants, for example, configured grant timers.

### Description of the Related Art:

Third Generation Partnership Project (3GPP) fifth generation (5G) new radio (NR) introduced configured grants (CG) to provide low latency transmission opportunities, wherein periodic transmission occasions may be available to a user equipment (UE) once the CG is configured and activated. With such a feature, the UE may transmit delay-sensitive data, such as ultra-reliable and low-latency communication (URLLC), immediately, without the need for signalling exchanges, such as scheduling requests (SR) or buffer status reports (BSR), to obtain an uplink grant.

### SUMMARY:

According to an embodiment, a method may include receiving at least one configuration from at least one network entity. The method may further include evaluating at least one received uplink grant or at least one physical uplink shared channel (PUSCH) of the at least one received uplink grant against at least one criterion associated with the at least one configuration. The method may further include selecting at least one timer value based on the evaluation.

In a variant, the at least one timer value is associated to a configured grant (CG) timer or a configured grant re-transmission timer.

In a variant, the at least one configuration may include one or more of at least one first CG timer value, at least one second CG timer value, and at least one criterion configured for timer value selection.

In a variant, the method may further include starting at least one timer according to the at least one selected configured grant timer value.

In a variant, the evaluating may include evaluating the at least one received uplink grant based on at least one logical channel priority.

In a variant, the method may further include transmitting at least one physical uplink shared channel associated with at least one uplink grant to the at least one network entity.

According to another embodiment, a method may include receiving at least one configuration from at least one network entity. The method may further include evaluating at least one operating status of at least one configured grant timer relating to at least one nominal hybrid automatic repeat request process according to the received at least one configuration. The method may further include initiating at least one nominal hybrid automatic repeat request process configured grant timer operating status-dependent action upon the operating status of the configured grant timer of the at least one nominal hybrid automatic repeat request process being evaluated as running. The method may further include evaluating at least one operating status of the CG timer of at least one backup HARQ process. The method may further include initiating at least one backup HARQ process CG timer operating status-dependent action. At least one medium access control (MAC) protocol data unit (PDU) may be generated and transmitted via at least one physical uplink shared channel (PUSCH) using the at least one backup HARQ process in response to determining that at least one operating status of the CG timer of at least one backup HARQ process is not running.

In a variant, the received at least one configuration may comprise information related to one or more of at least one nominal HARQ process and at least one backup HARQ process.

In a variant, the method may further include transmitting at least one physical uplink shared channel to the at least one network entity.

According to another embodiment, a method may include receiving at least one mapping configuration from at least one network entity. The method may further include evaluating at least one operating status of at least one configured grant timer relating to at least one hybrid automatic repeat request process according to the received at least one mapping configuration. The method may further include initiating at least one hybrid automatic repeat request process configured grant timer operating status-dependent action. At least one existing transport block (TB) stored in a buffer of the at least one hybrid automatic repeat request process may be overwritten upon at least one new medium access control (MAC) protocol data unit (PDU).

In a variant, the at least one operating status of at least one configured grant timer may be associated with a total elapsed time the at least one configured grant timer has been running.

In a variant, the at least one new MAC PDU may comprise data from a first subset of at least one logical channel (LCH) between a first time and a second time.

In a variant, the at least one existing TB may be overwritten upon the at least one new MAC PDU containing data from either the first or a second subset of at least one LCH between the second time and a third time.

In a variant, the method may further include processing at least one configured grant occasion for at least one new transmission.

In a variant, the method may further include generating at least one transport block.

In a variant, the method may further include transmitting at least one physical uplink shared channel to the at least one network entity.

A further embodiment may be directed to an apparatus that can include at least one processor and at least one memory and computer program code. The at least one memory and the computer program code can be configured to, with the at least one processor, cause the apparatus at least to perform a method according to any of the example embodiments, or any of the variants, described herein.

A further embodiment may be directed to an apparatus that can include means for performing the method according to any of the example embodiments, or any of the variants, described herein.

A further embodiment may be directed to a computer program product that may encode instructions for performing a process including a method according to any of the example embodiments, or any of the variants, described herein.

A further embodiment may be directed to a non-transitory computer-readable medium which may encode instructions that, when executed in hardware, perform a process including a method according to any of the example embodiments, or any of the variants, described herein.

A further embodiment may be directed to an apparatus that may include circuitry configured to perform a process including a method according to any of the example embodiments, or any of the variants, described herein.

### BRIEF DESCRIPTION OF THE DRAWINGS:

For proper understanding of this disclosure, reference should be made to the accompanying drawings, wherein:
FIG. 1 illustrates an example of a signaling diagram according to certain embodiments.
FIG. 2 illustrates another example of a signaling diagram according to various embodiments.
FIG. 3 illustrates another example of a signaling diagram according to some embodiments.
FIG. 4 illustrates an example of a user equipment having different allowances based on whether transport blocks may be overwritten according to certain embodiments.
FIG. 5 illustrates an example of a flow diagram of a method according to various embodiments.
FIG. 6 illustrates another example of a flow diagram of a method according to some embodiments.
FIG. 7 illustrates another example of a flow diagram of a method according to certain embodiments.
FIG. 8 illustrates an example of various network devices according to various embodiments.
FIG. 9 illustrates an example of a 5G network and system architecture according to some embodiments.
FIG. 10 illustrates an example of a flow diagram of a method according to various embodiments.

### DETAILED DESCRIPTION:

A hybrid automatic repeat request (HARQ) process identifier (ID) may be determined for each transmission on a CG occasion based on time parameters such as system frame number (SFN)/subframe/symbol numbers. Thus, HARQ process IDs of different occasions pertaining to a CG may be different. In addition, CG timers may be started for a certain HARQ process when a physical uplink shared channel (PUSCH) using this HARQ process ID, such as a PUSCH of a dynamic grant, is transmitted. CG occasions, which may use the same HARQ process, cannot be used by the UE to transmit new data while the corresponding CG timer is running. Such mechanisms may be employed to prevent the transport block (TB) of the dynamic PUSCH transmission stored in the HARQ buffer from being overwritten by the new data. Thus, if the UE performs a new transmission on the CG occasions with the same HARQ process, the transport block originally stored in the HARQ buffer of the same process would be overwritten, causing undesired data loss. Hence, the timer may ensure proper re-transmission of the TB by preserving it in the HARQ buffer over a time interval.

As described in 3GPP technical specification (TS) 38.331, a CG timer value may be configured by using radio resource control (RRC) in the *ConfiguredGrantConfig* information element (IE), which may be configured as follows:
-- If configured, the UE uses the configured grant timer (see 38.321, section 5.8.2) with this initial timer value.
-- Supported values are as follows in units of symbols:
-- For normal CP: 2, 7, {1, 2, 4, 5, 8, 10, 20, 32, 40, 64, 80, 128, 160, 256, 512, 640 } x 14
-- For extended CP: 2, 6, {1, 2, 4, 8, 20, 40, 80, 128, 160, 256, 320, 512, 640 } x 12 configuredGrantTimer ENUMERATED {
   sym2, sym7, sym1x14, sym2x14, sym4x14, sym5x14, sym8x14, sym10x14, sym16x14, sym20x14, sym32x14,
   sym40x14, sym64x14, sym80x14, sym128x14, sym160x14, sym256x14, sym512x14, sym640x14,
   sym6, sym1x12, sym2x12, sym4x12, sym5x12, sym8x12, sym10x12, sym16x12, sym20x12, sym32x12,
   sym40x12, sym64x12, sym80x12, sym128x12, sym256x12, sym320x12, sym512x12, sym640x12}

HARQ process IDs may be determined by the UE based on the following formula, as per 3GPP TS 38.321:
For configured uplink grants, the HARQ Process ID associated with the first symbol of a UL transmission is derived from the following equation:
   HARQ Process ID = [floor(CURRENT_symbol/periodicity)] modulo *nrofHARQ-Processes*

As shown in the table above, a first, short timer may have a first number of orthogonal frequency division multiplexing (OFDM) symbols, such as 7, while a second, longer timer may have a second number of OFDM symbols, such as 40 x 14. However, these values may be relative. For example, CG timers may have two values, one longer than the other, regardless of their values.

In 3GPP release (Rel)-16, multiple CG configurations may be permitted, and where multiple CGs are present. HARQ process IDs may be calculated using a formula such as: HARQ Process ID = [floor(CURRENT_symbol/*periodicity*)] modulo *nrofHARQ-Processes* + *HARQ_ID_offset.* In this example, an offset may allow different CG configurations to utilize different HARQ processes so as to avoid similar issues with dynamic PUSCH, as described above.

As noted above, using the CG occasions with the same HARQ process corresponding to a running CG timer may be prevented in order to protect the TB in the HARQ buffer already from being overwritten. However, as a result, when high-priority traffic arrives, the UE may be unable to process the received traffic using these forbidden CG occasions, introducing some delay for the high-priority traffic and diminishing the benefits of the CG.

Some 3GPP proposals have attempted to address the disadvantages described above. For example, even if the CG timer is running, the UE may still be allowed to use the CG occasions of the corresponding HARQ process if the UE intends to transmit URLLC data. This may be advantageous when the TB originally in the HARQ buffer conveys low-priority data, such as enhanced mobile broadband (eMBB) traffic. However, from a medium access control (MAC) perspective, traffic priority levels may be reflected on 16 logical channel (LCH) priorities, and a slight difference in terms of LCH priority, such as where the new TB is only one level higher than the old TB in terms of LCH priority, may not justify new data overwriting the original TB. Furthermore, overwriting may occur shortly after the CG timer starts, and the original TB may not have sufficient time to perform even one re-transmission, if needed. Hence, overwriting the original TB with the new data may not always be beneficial, and some techniques may achieve a better trade-off.

Certain embodiments described herein may have various benefits and/or advantages to overcome the disadvantages described above. Specifically, various embodiments described herein may provide a compromise between latency performance of the new data and protection of TB in the HARQ buffer when the CG timer is running. For example, certain embodiments may provide a mechanism that offers different levels of protection in terms of how long TBs are protected from overwriting to TB associating to different priorities, while preventing low priority TBs occupying the HARQ process for too long, and enabling quicker transmissions of higher-priority data. In addition, some embodiments may provide at least one backup HARQ process which may be configured for new transmissions, decreasing the probability of overwriting the existing TBs stored in the buffer of a nominal HARQ process. Furthermore, some embodiments may gradually lift the restriction of HARQ process overwriting based on how much time has passed since the CG timer initially started, providing more time for the old TBs to be re-transmitted before potentially being overwritten by other new transmissions. Thus, certain embodiments are directed to improvements in computer-related technology, such as wireless communication technology.

Described herein are various techniques related to at least one CG timer, while some embodiments may also apply to other timers configured to prevent TB overwriting, for example, at least one CG retransmission timer configured to allow autonomous retransmission of a MAC protocol data unit (PDU) in NR-U. Specifically, such a timer may start when a TB is generated but not transmitted due to listen before talk (LBT) failure, and the associated HARQ process may not be used for new transmission while the timer is running. Several techniques described herein may be leveraged directly for CG retransmission timer by replacing CG timers with CG retransmission timers.

Throughout this disclosure, physical layer priorities may relate to priorities of at least one radio resource, such as PUSCH, which may be indicated in a DCI configured to schedule the PUSCH. 3GPP defines two levels of physical layer priorities. Similarly, logical channel priorities may relate to priorities of traffic/service type. For example, a packet data unit generated for a PUSCH may contain data having a plurality of logical channel priorities. 3GPP defines 16 levels of logical channel priorities. In addition, logical channel priorities may have 16 values and/or may depend on particular network implementation since traffic may be differentiated with different logical channel priorities.

As described in further detail below, criteria for choosing at least one CG timer value may be influenced by physical layer priorities and/or logical channel priorities. For example, different CG timer values may be selected based on whether a physical layer priority of a PUSCH is high priority (at least one first value, such as 1) or low priority (at least one second value, such as 0). Similarly, different CG timer values may be selected based on the highest priority of LCH with data conveyed by the PDU generated for the PUSCH. For example, a threshold level may be configured to determine the CG timer value, such as if the highest LCH priority is higher than the threshold, a long CG timer may be selected, while a short CG timer may be selected if the highest LCH priority is lower or equal to the threshold.

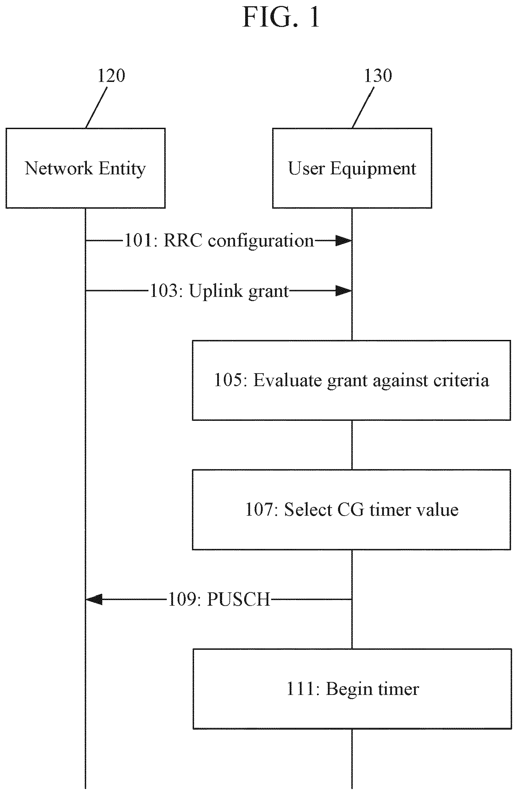

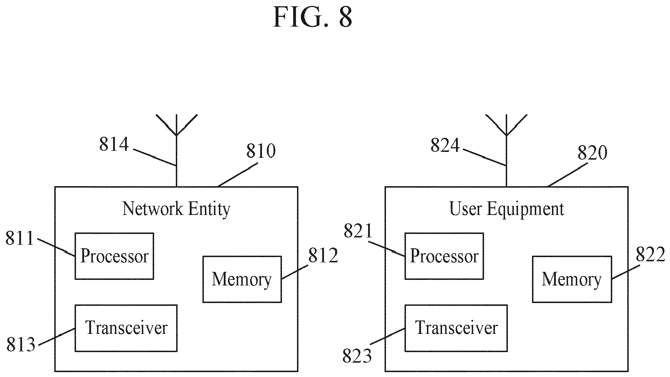

FIG. 1 illustrates an example of a signaling diagram showing communications between network entity (NE) 120 and UE 130. NE 120 may be similar to NE 810, and UE 130 may be similar to UE 820, each illustrated in FIG. 8.

At 101, NE 120 may be configured to transmit to UE 130 at least one configuration, for example, at least one CG configuration via RRC. In some embodiments, the at least one configuration may comprise one or more of at least one first CG timer value, at least one second CG timer value, and at least one criterion configured for timer value selection. For example, the at least one criterion may comprise one or more of at least one grant priority level, at least one grant parameter, and data carried by at least one PUSCH. In addition, one or more of the at least one first CG timer value and the at least one second CG timer value may be configured to indicate a period of time that at least one timer should run once started.

At 103, NE 120 may be configured to transmit to UE 130 at least one uplink grant, for example, at least one downlink control information (DCI) configured for dynamic grant scheduling. In some embodiments, the at least one uplink grant may comprise one or more of at least one grant characteristic and at least one parameter. For example, the at least one uplink grant may be associated with one or more of at least one modulation/coding scheme (MCS), at least one transmission power, at least one multiple-input multiple-output (MIMO) setting, at least one HARQ setting, at least one DCI format, at least one channel access priority class (CAPC), at least one physical layer priority value, and at least one number of repetitions. As an example, the at least one uplink grant may comprise at least one explicit indicator of at least one timer value configured to indicate to UE 130 to begin at least one timer accordingly after the PUSCH of the at least one uplink grant is transmitted. Additionally or alternatively, the at least one timer value may be implicitly indicated by the type of the uplink grant; for example, for PUSCH transmission of a dynamic grant, one or more of CG type 1 and CG type 2 may trigger the CG timer to start with at least one different interval.

At 105, UE 130 may be configured to evaluate the at least one received uplink grant against the at least one criterion. For example, UE 130 may be configured to check if the at least one received uplink grant and/or at least one PUSCH related to the at least one uplink grant satisfies the at least one criterion.

At 107, UE 130 may be configured to select one or more of the at least one CG timer values. For example, UE 130 may be configured to select the at least one first CG timer value where at least one characteristic of the at least one uplink grant does not satisfy the at least one criterion. Additionally or alternatively, UE 130 may be configured to select the at least one second CG timer value where the at least one uplink grant does satisfy the at least one criterion. In certain embodiments, where two CG timer values have been configured, UE 130 may be configured to select the at least one first CG timer value where none, all, or a predetermined threshold number of criteria are satisfied. Similarly, where more than two CG timer values have been configured, UE 130 may be configured to select at least one CG timer value satisfying the highest number of criteria.

In some embodiments, UE 130 may perform the selection based upon one or more of the at least one grant characteristic and the at least one parameter configured to implicitly indicate the CG timer value that UE 130 should apply when the PUSCH of the grant is transmitted. For example, a dynamic grant may have a priority characterization, such as "high priority" or "low priority," based on at least one explicit/implicit indication in the DCI.

In various embodiments, UE 130 may perform the selection based upon at least one type/priority of data conveyed by PUSCH of at least one received uplink grant, which may be associated with one or more of at least one parameter and at least one rule configured for at least one LCH corresponding with data mapped to the at least one uplink grant, such as priority, prioritized bit rate (PBR), bucket size duration (BSD), and logical channel prioritization (LCP) restriction. For example, at least one long CG timer value may be selected if any data in the PUSCH is from a LCH with priority higher than at least one threshold; otherwise, at least one short CG timer value may be selected. In some embodiments, the at least one short CG timer value may be less than or equal to at least one timer threshold value, while the at least one long CG timer value may be greater than the at least one timer threshold value.

In some embodiments, the at least one selected CG timer value may be 0, such that the timer does not begin after UE 130 transmits the PUSCH. For example, the at least one CG timer value may be multiplied by a factor associated with a priority configured of the logical channel, resulting in a timer value which is longer with the higher the priority value; the higher value of priority parameter may translate into lower priority of 3GPP data system design. Additionally or alternatively, the at least one CG timer value may be selected based upon one or more of at least one MAC CE type and at least one content conveyed by the triggering PUSCH (e.g. BSR relating to high-priority LCHs or low-priority LCHs); at least one presence of MAC SDU associated with SRB (e.g. data from dedicated control channel (DCCH) or common control channel (CCCH)) in the MAC PDU of the triggering PUSCH; at least one type/priority of uplink control information (UCI) multiplexed in the triggering-PUSCH (e.g. high priority or low priority HARQ-ACK; high priority or low priority scheduling request); at least one fifth generation quality of service indicator (5QI)/quality of service flow identifier (QFI)/PC5 quality of service indicator (PQI); and/or various QoS parameters, associated with data conveyed by the MAC PDU of the triggering PUSCH, such as at least one packet delay budget (PDB) and/or remaining time before at least one delivery deadline.

In various embodiments, the at least one CG timer value may be configured for each LCH. For example, the at least one CG timer value may be selected based on which at least one LCH mapped to the triggering PUSCH has the longest CG timer value and/or according to the LCH having the highest priority.

In certain embodiments, the priority of the grant whose PUSCH triggered the CG timer to start may be considered together with the priority of the CG, wherein each grant may be assigned two or more levels of priority (e.g. "high" and "low"). As an example, the at least one CG timer value may be selected based upon at least one comparison of priority. Specifically, at least one shorter CG timer value may be applied in case the CG priority is greater than or equal to the priority of grant relating to the triggering PUSCH; otherwise, at least one longer timer value may be selected and started. In this way, different CG timers may be used for each of at least one active CG configuration.

In some embodiments, where multiple CG configurations are active concurrently, some HARQ processes may be used for more than one CG configuration and/or at least one common CG timer may be applied for all active CG configurations having at least one resource with the same HARQ process associated with the triggering PUSCH. For example, when a CG timer is configured to be triggered for at least one HARQ process, UE 130 may not be configured regarding which of the CG timers should be started if separate CG timers are configured per CG configuration. Thus, the timer for the multiple CG configurations may also be selected based on the priority of the triggering PUSCH. For example, where the priority of the triggering PUSCH has higher priority, the longest of the applicable CG timers may be selected, and where the priority of the triggering PUSCH has lower priority, the shortest of the applicable CG timers may be selected.

In another example, where only "long" and "short" possible CG timer values are available, and if there are multiple CG configurations having resources with the same HARQ process, the at least one CG timer for these CG configurations may be selected depending on if at least one of these CG configurations has higher or lower priority than the triggering PUSCH. Specifically, if at least one of the CG configurations having the same resource of the same HARQ process as the triggering PUSCH has a higher priority than the triggering PUSCH, at least one short CG timer may be selected for all of these CG configurations. Conversely, if none of these CG configurations having the same resource of the same HARQ process as the triggering PUSCH has a higher priority than the triggering PUSCH, at least one long CG timer may be selected for all these CG configurations.

In various embodiments, when at least one CG timer is selected and triggered, UE 130 may notify NE 120 of the at least one CG timer value it has chosen; thus, NE 120 may be aware of the CG timer status and properly perform resource allocation. Such notification may include one or more of uplink control information (UCI), at least one MAC CE, and other types of uplink control signaling. In addition, UE 130 may be configured to implicitly indicate the at least one selected CG timer value using at least one transmission setting of the triggering PUSCH. For example, different demodulation reference signal (DMRS) patterns/sequences and/or different uplink beam directions, associated with the triggering PUSCH may be applied to indicate different CG timer values.

At 109, UE 130 may be configured to transmit to NE 120 at least one PUSCH associated with at least one grant. Simultaneously or non-simultaneously with 109, at 111, UE 130 may be configured to begin at least one timer according to the at least one selected CG timer value. In some embodiments, based on the priority of the at least one grant, the at least one timer may be a "long" or "short" CG timer when the PUSCH associated with at least one grant is transmitted. For example, UE 130 may begin at least one "long" CG timer if the priority of the at least one grant is "high," allowing UE 130 to protect its TB with a longer period of time and ensure that data conveyed by the PUSCH of the at least one grant may be sent reliably with sufficient retransmission if needed. Conversely, UE 130 may begin at least one "short" CG timer if the priority of the at least one grant is "low", such that the TB prepared for the at least one grant does not occupy the HARQ buffer for too long and freeing the HARQ process for other traffic earlier.

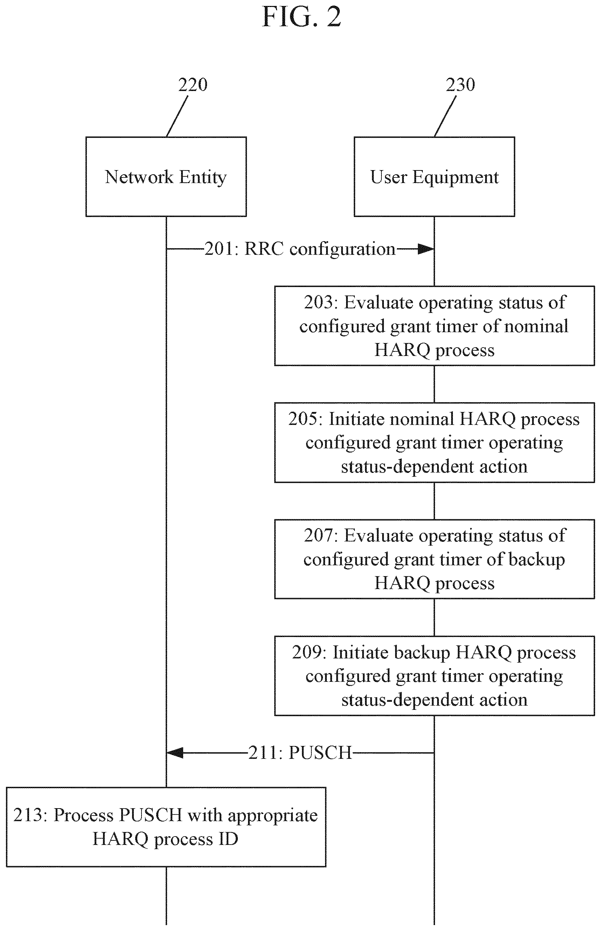

FIG. 2 illustrates an example of a signaling diagram showing communications between NE 220 and UE 230. NE 220 may be similar to NE 810, and UE 230 may be similar to UE 820, each illustrated in FIG. 8.

At 201, NE 220 may transmit to UE 230 at least one configuration, for example, at least one CG configuration via RRC. In some embodiments, the at least one configuration may comprise one or more of at least one CG timer and information relating to at least one nominal HARQ process associating at least one CG occasion of the at least one CG configuration.

In certain embodiments, for each CG occasion, in addition to the nominal HARQ process that may be derived based on one or more of at least one SFN, at least one subframe, and at least one slot number, NE 220 may explicitly and/or implicitly provide at least one backup HARQ process ID to UE 230, which may be configured for UE 230 to use for at least one new transmission if the at least one CG timer of the nominal HARQ process is running. For example, UE 230 may be configured with two (or more) HARQ PIDs associated with at least one CG occasion, for example, pre-configured by RRC and/or fixed by specifications.

In certain embodiments, at least one backup HARQ process ID may be derived based on at least one implicit relationship to the nominal HARQ process, such as backup HARQ PID = (nominal HARQ PID + *X*) mod (*N*), wherein *X* may be an integer, and *N* may be the total number of HARQ processes configured for a CG. Alternatively, in case multiple CG configurations are configured in UE 230, the formula may be backup HARQ PID = (nominal HARQ PID + *X*) mod (*N*) + HARQ_ID_offset. When an initially-determined nominal HARQ process ID cannot be used due to the at least one CG timer running, UE 230 may start searching for a backup HARQ process by applying the formula with *X*=1 and in case the determined HARQ process has also CG timer running start incrementing *X* by 1 until a usable HARQ process is found or until *X* becomes greater than or equal to the number of HARQ processes configured for a certain CG.

At 203, UE 230 may evaluate at least one operating status of at least one CG timer relating to at least one nominal HARQ process. For example, UE 230 may determine whether at least one CG timer of the nominal HARQ process is running. Additionally or alternatively, UE 230 may evaluate at least one backup HARQ process associated with the CG occasion. Furthermore, UE 230 may use the at least one backup HARQ process associated with the CG occasion to perform at least one initial transmission using this CG occasion in response to the evaluation results.

At 205, UE 230 may initiate at least one nominal HARQ process CG timer operating status-dependent action. For example, at 207, UE 230 may evaluate at least one operating status of the CG timer of at least one backup HARQ process, such as to evaluate whether the CG timer of the backup HARQ process is running, after the CG timer of the nominal HARQ process is determined to be running.

At 209, in response to determining that at least one operating status of the CG timer of at least one backup HARQ process is not running in step 207, UE 230 may initiate at least one backup HARQ process CG timer operating status-dependent action. In some embodiments, UE 230 may perform a new transmission on the CG occasion using the backup HARQ process if the CG timer corresponding to the backup HARQ process is not running. Otherwise, if CG timers of both nominal and backup HARQ processes are running, the UE may skip this CG occasion.

In certain embodiments, the value range of *X* that UE 230 may consider for a CG may be pre-configured, dynamically indicated by at least one MAC CE, and/or indicated in the DCI that scheduled dynamic PUSCH which triggers the at least one CG timer. For subsequent transmissions related to this CG occasion, UE 230 may either fall back to the original formula and/or keep on applying the modified formula with the determined value of X. UE 230 may also be configured to fall back to at least one formula, such as provided above, after a configurable or pre-specified time duration.

In some embodiments, UE 230 may embed at least one indication in the PUSCH, such as in at least one MAC CE and/or in at least one multiplexed UCI, to notify NE 220 whether the PUSCH was transmitted using the nominal or backup HARQ PID. As a result, NE 230 may be configured to schedule at least one retransmission grant with at least one correct HARQ process, if needed. In addition, UE 230 may be configured to implicitly indicate whether the PUSCH was transmitted using the at least one nominal or backup HARQ PID, using at least one transmission setting of the PUSCH. For example, at least one different DMRS pattern/sequence, and/or different uplink beam direction associated with the PUSCH may be applied to indicate whether the PUSCH was transmitted using the nominal or backup HARQ PID.

In various embodiments, UE 230 may be configured such that it is only allowed to use the at least one backup HARQ process only if it intends to transmit data from certain LCHs, such as data from LCHs with priority higher than a threshold. In addition, whether the backup HARQ processes could be used may also depend on other factors such as type/contents MAC CEs that UE 230 intends to transmit on the new transmission; whether any data associating to SRB (*e.g.* data from CCCH or DCCH) is to be included in the new transmission; whether the new transmission is actually an autonomous transmission of a MAC PDU that was de-prioritized and/or not transmitted completely (*e.g.* due to intra-UE prioritization or LBT failure); at least one CAPC selected or to be selected for the MAC PDU to be transmitted on this new transmission; an amount of time that data conveyed by this new transmission has been buffered (*e.g.* how long the data has waited in the queue), an amount of remaining time to the required delivery deadline of the data; and whether the new transmission will be multiplexed with UCI associating to high priority traffics (*e.g.* HARQ-ACK/NACK for high-priority PDSCH; scheduling request triggered by at least one high priority LCH). In addition, these criteria (*e.g.* LCH priority) may also affect at least one set of backup HARQ processes that the UE could consider (*e.g.* allowed value range of *X*). For instance, a wider range of backup HARQ processes may be used when data from a higher priority LCH is to be conveyed by the new transmission. At 211, UE 220 may transmit to NE 230 at least one PUSCH. For example, at least one MAC PDU may be generated and transmitted via at least one PUSCH according to the at least one backup HARQ process in response to determining that at least one operating status of the CG timer of at least one nominal HARQ process is running.

At 213, NE 230 may process the at least one PUSCH with at least one appropriate HARQ process ID. In some embodiments, NE 230 may configure UE 220 with at least one instruction of how the backup HARQ process for the at least one CG occasion should be derived. Then, upon reception of PUSCH on each CG occasion, NE 230 may apply at least one appropriate HARQ process based on its knowledge on whether the configured grant timer for the nominal HARQ process is running.

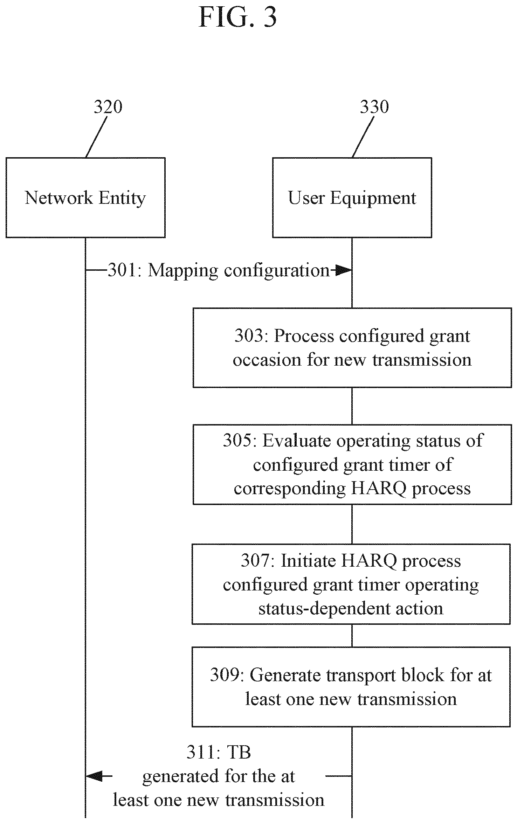

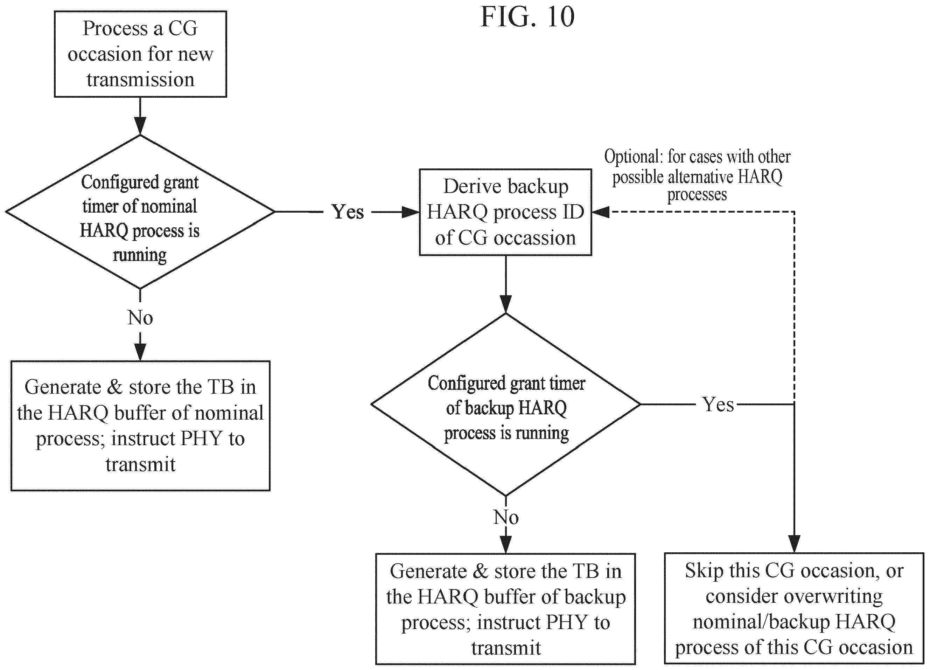

FIG. 3 illustrates an example of a signaling diagram showing communications between NE 320 and UE 330. NE 320 may be similar to NE 810, and UE 330 may be similar to UE 820, each illustrated in FIG. 8. The signalling diagram shown in FIG. 3 may be similar to the flow diagram shown in FIG. 10.

At 301, NE 320 may transmit to UE 330 at least one mapping configuration. For example, the at least one mapping configuration may comprise one or more of at least one total time elapsed and at least one overwriting behavior. At 303, UE 330 may process at least one CG occasion for at least one new transmission.

At 305, UE 330 may evaluate at least one operating status of the at least one CG timer of at least one corresponding HARQ process. For example, UE 330 may determine whether overwriting is allowed based on the content of the new TB as well as how much time has passed since the CG timer is started initially.

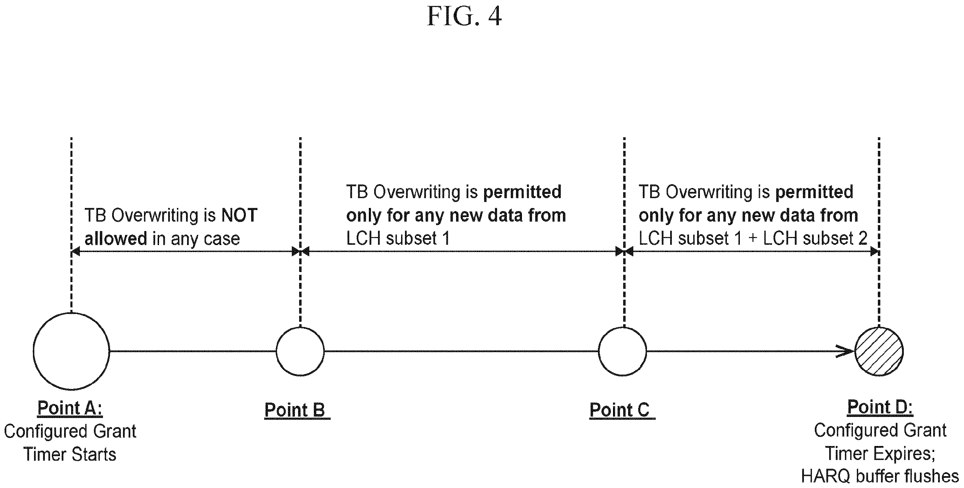

At 307, UE 330 may initiate at least one HARQ process CG timer operating status-dependent action. In some embodiments, UE 330 may have at least one different allowance indicating whether the TB stored in the buffer of the at least one HARQ process could be overwritten, which may depend on how much time in total has passed since the timer has initially started, as illustrated in FIG. 4. For example, at least one CG timer may start running at point A due to transmission of at least one PUSCH, and the CG occasions with the corresponding HARQ process may be completely prohibited for new transmission. Then, as the timer continues to run and reaches point B, UE 330 may overwrite the at least one existing TB that is stored in the buffer of the at least HARQ process only if the new MAC PDU contains data from a first subset of LCHs. When the timer reaches point C, UE 330 may be further allowed to overwrite the existing TB if the new MAC PDU contains data from either the first or a second subset of LCHs. Finally, when the timer expires at point D, the TB stored in the HARQ buffer may be flushed and the HARQ process may be used for any new transmission. Thus, the restrictions on TB overwriting may be gradually relaxed as the timer runs. Before the timer expires, it may have re-started several times already due to each re-transmission. It is noted that the total elapsed time since the timer starts initially may be irrespective to how many times the timer has re-started. At 309, UE 330 may generate at least one transport block for at least one new transmission. At 311, UE 330 may transmit the transport block generated for the at least one new transmission using at least one PUSCH to NE 320.

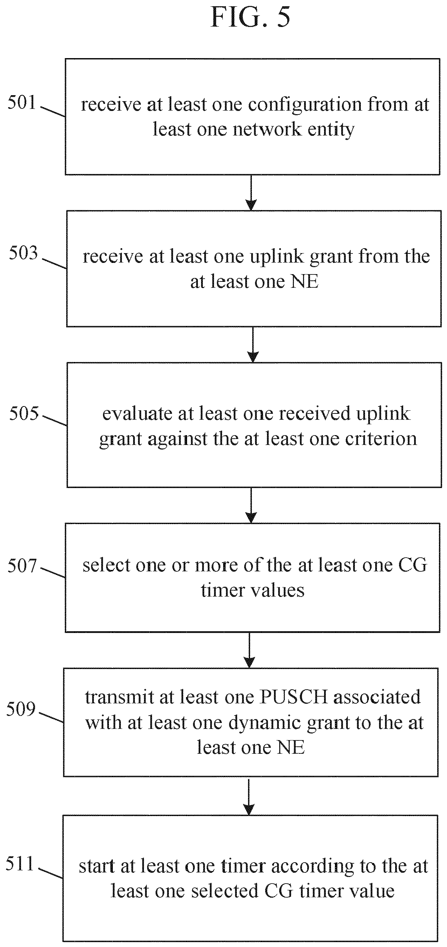

FIG. 5 illustrates an example of a flow diagram of a method that may be performed by a UE, such as UE 820 illustrated in FIG. 8, according to certain embodiments.

At 501, at least one configuration, for example, at least one CG configuration, may be received, such as via RRC, from at least one NE, such as NE 810 illustrated in FIG. 8. In some embodiments, the at least one configuration may comprise one or more of at least one first CG timer value, at least one second CG timer value, and at least one criterion configured for timer value selection. For example, the at least one criterion may comprise one or more of at least one grant priority level, at least one LCH priority, at least one grant parameter, and data carried by at least one PUSCH. In addition, one or more of the at least one first CG timer value and the at least one second CG timer value may be configured to indicate a period of time that at least one timer should run once started.

At 503, at least one uplink grant may be received from the at least one NE, for example, at least one DCI configured for dynamic grant scheduling. In some embodiments, the at least one uplink grant may comprise one or more of at least one grant characteristic and at least one parameter. For example, the at least one uplink grant may be associated with one or more of at least one modulation/coding scheme (MCS), at least one transmission power, at least one multiple-input multiple-output (MIMO) setting, at least one HARQ setting, at least one DCI format, at least one channel access priority class (CAPC), at least one physical layer priority value, and at least one number of repetitions. As an example, the at least one uplink grant may comprise at least one explicit indicator of at least one timer value configured to indicate to UE 130 to begin at least one timer accordingly after the PUSCH of the at least one uplink grant is transmitted. Additionally or alternatively, the at least one timer value may be implicitly indicated by the type of the uplink grant; for example, for PUSCH transmission of a dynamic grant, one or more of CG type 1 and CG type 2 may trigger the CG timer to start with at least one different interval.

At 505, at least one received uplink grant against the at least one criterion may be evaluated. For example, the at least one received uplink grant and/or at least one PUSCH related to the at least one uplink grant may be checked for satisfying the at least one criterion.

At 507, one or more of the at least one CG timer values may be selected. For example, the at least one first CG timer value may be selected where at least one characteristic of the at least one uplink grant does not satisfy the at least one criterion. Additionally or alternatively, the at least one second CG timer value may be selected where the at least one uplink grant does satisfy the at least one criterion. In certain embodiments, where two CG timer values have been configured, the at least one first CG timer value may be selected where none, all, or a predetermined threshold number of criteria are satisfied.

Similarly, where more than two CG timer values have been configured, at least one CG timer value satisfying the highest number of criteria may be selected.

In some embodiments, the selection may be performed based upon the one or more at least one grant characteristic and/or at least one parameter configured to implicitly indicate the CG timer value that the UE should apply when the PUSCH of this grant is transmitted. For example, a dynamic grant may have a priority characterization, such as "high priority" or "low priority," based on at least one explicit/implicit indication in the DCI.

In various embodiments, the selection may be performed based upon at least one type/priority of data conveyed by PUSCH of at least one received uplink grant, which may be associated with at least one parameters/rules configured for at least one LCH corresponding with data mapped to the at least one uplink grant, such as priority, PBR, BSD, and LCP restriction. For example, at least one long CG timer value may be selected if any data in the PUSCH is from a LCH with priority higher than at least one threshold; otherwise, at least one short CG timer value may be selected. In some embodiments, the at least one short CG timer value may be less than or equal to at least one timer threshold value, while the at least one long CG timer value may be greater than the at least one timer threshold value.

In some embodiments, the at least one selected CG timer value may be 0, configured such that the timer does not begin after the UE transmits the PUSCH. For example, the at least one CG timer value may be multiplied by a factor associated with a priority configured of the logical channel, resulting in a timer value which is longer with the higher the priority value; the higher value of priority parameter may translate into lower priority of 3GPP data system design. Additionally or alternatively, the at least one CG timer value may be selected based upon one or more of at least one MAC CE type and at least one content conveyed by the triggering PUSCH (*e.g.* BSR relating to high-priority LCHs or low-priority LCHs); at least one presence of MAC SDU associated with SRB (*e.g.* data from dedicated control channel (DCCH) or common control channel (CCCH)) in the MAC PDU of the triggering PUSCH; at least one type/priority of uplink control information (UCI) multiplexed in the triggering-PUSCH (*e.g.* high priority or low priority HARQ-ACK; high priority or low priority scheduling request); at least one fifth generation quality of service indicator (5QI)/quality of service flow identifier (QFI)/PC5 quality of service indicator (PQI); and/or various QoS parameters, associated with data conveyed by the MAC PDU of the triggering PUSCH, such as at least one packet delay budget (PDB) and/or remaining time before at least one delivery deadline.

In various embodiments, the at least one CG timer value may be configured for each LCH. For example, the at least one CG timer value may be selected based on which at least one LCH mapped to the triggering PUSCH has the longest CG timer value and/or according to the LCH having the highest priority.

In certain embodiments, the priority of the grant whose PUSCH triggered the CG timer to start may be considered together with the priority of the CG, wherein each grant may be assigned two or more levels of priority (*e.g.* "high" and "low"). As an example, the at least one CG timer value may be selected based upon at least one comparison of priority. Specifically, at least one shorter CG timer value may be applied in case the CG priority is greater than or equal to the priority of grant relating to the triggering PUSCH; otherwise, at least one longer timer value may be selected and started. In this way, different CG timers may be used for each of at least one active CG configuration.

In some embodiments, where multiple CG configurations are active concurrently, some HARQ processes may be used for more than one CG configuration and/or at least one common CG timer may be applied for all active CG configurations having at least one resource with the same HARQ process associated with the triggering PUSCH. For example, when a CG timer is configured to be triggered for at least one HARQ process, the UE may not be configured regarding which of the CG timers should be started if separate CG timers are configured per CG configuration. Thus, the timer for the multiple CG configurations may also be selected based on the priority of the triggering PUSCH. For example, where the priority of the triggering PUSCH has higher priority, the longest of the applicable CG timers may be selected, and where the priority of the triggering PUSCH has lower priority, the shortest of the applicable CG timers may be selected.

In another example, where only "long" and "short" possible CG timer values are available, and if there are multiple CG configurations having resources with the same HARQ process, the at least one CG timer for these CG configurations may be selected depending on if at least one of these CG configurations has higher or lower priority than the triggering PUSCH. Specifically, if at least one of the CG configurations having the same resource of the same HARQ process as the triggering PUSCH has a higher priority than the triggering PUSCH, at least one short CG timer may be selected for all of these CG configurations. Conversely, if none of these CG configurations having the same resource of the same HARQ process as the triggering PUSCH has a higher priority than the triggering PUSCH, at least one long CG timer may be selected for all these CG configurations.

In various embodiments, when at least one CG timer is selected and triggered, the UE may notify the NE of the at least one CG timer value it has chosen; thus, the NE may be aware of the CG timer status and properly perform resource allocation. Such notification may include one or more of UCI, at least one MAC CE, and other types of uplink control signaling. In addition, the at least one selected CG timer value may be implicitly indicated using at least one transmission setting of the triggering PUSCH. For example, different DMRS patterns/sequences and/or different uplink beam directions, associated with the triggering PUSCH may be applied to indicate different CG timer values.

At 509, at least one PUSCH associated with at least one grant may be transmitted to the at least NE. Simultaneously or non-simultaneously with 509, at 511, at least one timer may be begun according to the at least one selected CG timer value. In some embodiments, based on the priority of the at least one grant, the at least one timer may be a "long" or "short" CG timer when the PUSCH associated with at least one grant is transmitted. For example, at least one "long" CG timer may be started if the priority of the at least one grant is "high," allowing the UE to protect its TB with a longer period of time and ensure that data conveyed by the PUSCH of the at least one grant may be sent reliably with sufficient retransmission if needed. Conversely, at least one "short" CG timer may be begun if the priority of the at least one grant is "low", such that the TB prepared for the at least one grant does not occupy the HARQ buffer for too long and freeing the HARQ process for other traffic earlier.

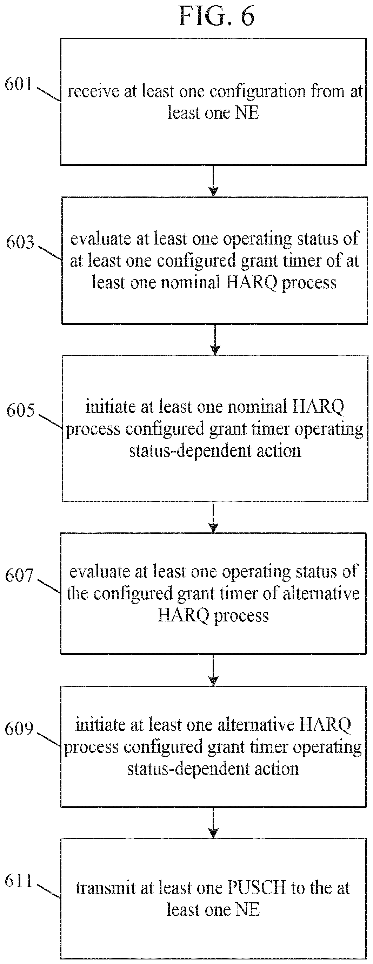

FIG. 6 illustrates an example of a flow diagram of a method that may be performed by a UE, such as UE 820 illustrated in FIG. 8, according to certain embodiments.

At 601, at least one configuration, for example, at least one CG configuration, such as via RRC, may be received from at least one NE, such as NE 810 illustrated in FIG. 8. In some embodiments, the at least one configuration may comprise one or more of at least one CG timer and information relating to at least one nominal HARQ process associating at least one CG occasion of the at least one CG configuration.

In certain embodiments, for each CG occasion, in addition to the nominal HARQ process that may be derived based on one or more of at least one SFN, at least one subframe, and at least one slot number, at least one backup HARQ process ID may be explicitly and/or implicitly received, which may be configured for the UE to use for at least one new transmission if the at least one CG timer of the nominal HARQ process is running. For example, two (or more) HARQ PIDs associated with at least one CG occasion, for example, pre-configured by RRC and/or fixed by specifications.

In certain embodiments, at least one backup HARQ process ID may be derived based on at least one implicit relationship to the nominal HARQ process, such as backup HARQ PID = (nominal HARQ PID + *X*) mod (*N*), wherein *X* may be an integer, and *N* may be the total number of HARQ processes configured for a CG. Alternatively, in case multiple CG configurations are configured in UE 230, the formula may be backup HARQ PID = (nominal HARQ PID + *X*) mod (*N*) + HARQ_ID_offset. When an initially-determined nominal HARQ process ID cannot be used due to the at least one CG timer running, UE 230 may start searching for a backup HARQ process by applying the formula with *X*=1 and in case the determined HARQ process has also CG timer running start incrementing *X* by 1 until a usable HARQ process is found or until *X* becomes greater than or equal to the number of HARQ processes configured for a certain CG.

At 603, at least one operating status of at least one CG timer relating to at least one nominal HARQ process may be evaluated. For example, it may be determined whether at least one CG timer of the nominal HARQ process is running. Additionally or alternatively, at least one backup HARQ process associated with the CG occasion may be evaluated. Furthermore, the at least one backup HARQ process associated with the CG occasion may be used to perform at least one initial transmission using this CG occasion in response to the evaluation results.

At 605, at least one nominal HARQ process CG timer operating status-dependent action may be initiated. For example, at 607, at least one operating status of the CG timer of at least one backup HARQ process may be evaluated, such as to evaluate whether the CG timer of the backup HARQ process is running, after the CG timer of the nominal HARQ process is determined to be running.

At 609, in response to determining that at least one operating status of the CG timer of at least one backup HARQ process is not running in step 607, at least one backup HARQ process CG timer operating status-dependent action may be initiated. In some embodiments, at least one new transmission may be performed on the CG occasion using the backup HARQ process if the CG timer corresponding to the backup HARQ process is not running. Otherwise, if CG timers of both nominal and backup HARQ processes are running, the UE may skip this CG occasion.

In certain embodiments, the value range of *X* that the UE may consider for a CG may be pre-configured, dynamically indicated by at least one MAC CE, and/or indicated in the DCI that scheduled dynamic PUSCH which triggers the at least one CG timer. For subsequent transmissions related to this CG occasion, the UE may either fall back to the original formula and/or keep on applying the modified formula with the determined value of X. The UE may also be configured to fall back to at least one formula provided above after a configurable or pre-specified time duration.

In some embodiments, the UE may embed at least one indication in the PUSCH, such as in at least one MAC CE and/or in at least one multiplexed UCI, to notify the NE whether the PUSCH was transmitted using the nominal or backup HARQ PID. As a result, the NE may be configured to schedule at least one retransmission grant with at least one correct HARQ process, if needed. In addition, at least one indication may be transmitted which implicitly indicates whether the PUSCH was transmitted using the at least one nominal or backup HARQ PID, using at least one transmission setting of the PUSCH. For example, at least one different DMRS pattern/sequence, and/or different uplink beam direction associated with the PUSCH may be applied to indicate whether the PUSCH was transmitted using the nominal or backup HARQ PID.

In various embodiments, the UE may be configured such that it is only allowed to use the at least one backup HARQ process only if it intends to transmit data from certain LCHs, such as data from LCHs with priority higher than a threshold. In addition, whether the backup HARQ processes could be used may also depend on other factors such as type/contents MAC CEs that the UE intends to transmit on the new transmission; whether any data associating to SRB (e.g. data from CCCH or DCCH) is to be included in the new transmission; whether the new transmission is actually an autonomous transmission of a MAC PDU that was de-prioritized and/or not transmitted completely (*e.g.,* due to intra-UE prioritization or LBT failure); at least one channel access priority class (CAPC) that was selected or to be selected for the MAC PDU to be transmitted on this new transmission; an amount of time that data conveyed by this new transmission has been buffered (*e.g.* how long the data has waited in the queue); an amount of remaining time to the required delivery deadline of the data; and whether the new transmission will be multiplexed with UCI associating to high priority traffics (*e.g.* HARQ-ACK/NACK for high-priority PDSCH; scheduling request triggered by at least one high priority LCH). In addition, these criteria (e.g. LCH priority) may also affect at least one set of backup HARQ processes that the UE could consider (*e.g.* allowed value range of *X*). For instance, a wider range of backup HARQ processes can be used when data from a higher priority LCH is to be conveyed by the new transmission. At 611, at least one PUSCH may be transmitted to the at least one NE. For example, at least one MAC PDU may be generated and transmitted via at least one PUSCH according to the at least one backup HARQ process in response to determining that at least one operating status of the CG timer of at least one nominal HARQ process is running.

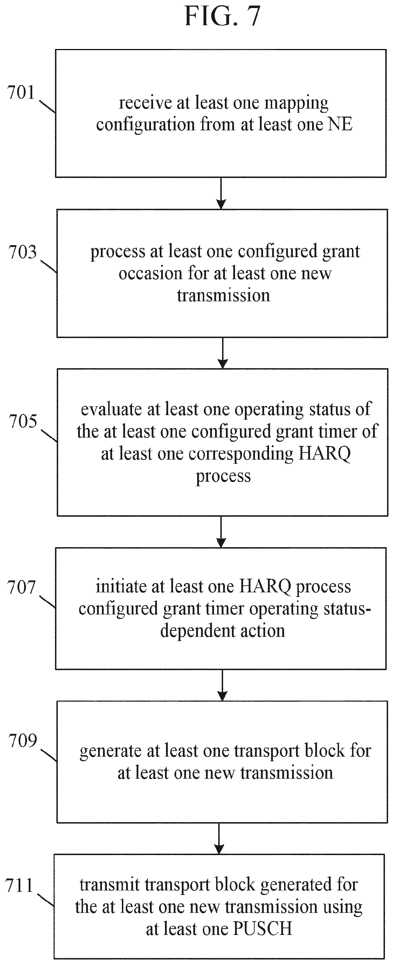

FIG. 7 illustrates an example of a flow diagram of a method that may be performed by a UE, such as UE 820 illustrated in FIG. 8, according to certain embodiments. The flow diagram shown in FIG. 7 may be similar to the flow diagram shown in FIG. 10.

At 701, at least one mapping configuration may be received from at least one NE, such as NE 810 illustrated in FIG. 8. For example, the at least one mapping configuration may comprise one or more of at least one total time elapsed and at least one overwriting behavior.

At 703, at least one CG occasion for at least one new transmission may be processed.

At 705, at least one operating status of the at least one CG timer of at least one corresponding HARQ process may be evaluated. For example, the UE may determine whether overwriting is allowed based on the content of the new TB as well as how much time has passed since the CG timer is started initially.

At 707, at least one HARQ process CG timer operating status-dependent action may be initiated. In some embodiments, the UE may have at least one different allowance indicating whether the TB stored in the buffer of the at least one HARQ process could be overwritten, which may depend on how much time in total has passed since the timer has initially started, as illustrated in FIG. 4. For example, the at least one CG timer may start running at point A due to transmission of at least one PUSCH, and the CG occasions with the corresponding HARQ process may be completely prohibited for new transmission. Then, when time reaches point B, the UE may overwrite the at least one existing TB only if the new MAC PDU contains data from a first subset of LCHs. When the time reaches point C, the UE may be further allowed to overwrite the existing TB that is stored in the buffer of the at least HARQ process if the new MAC PDU contains data from either the first or a second subset of LCHs. Finally, when the timer expires at point D, the TB stored in the HARQ buffer may be flushed and the HARQ process may be used for any new transmission. Thus, the restrictions on TB overwriting may be gradually relaxed as the timer runs. Before the timer expires, it may have re-started several times already due to each re-transmission. It is noted that the total elapsed time since the timer starts initially may be irrespective to how many times the timer has re-started. At 709, at least one transport block may be generated for at least one new transmission. At 711, UE 330 may transmit the at least one transport block generated for the at least one new transmission using at least one PUSCH to the at least one NE.

FIG. 8 illustrates an example of a system according to certain example embodiments. In one example embodiment, a system may include multiple devices, such as, for example, network entity 810 and/or user equipment 820.

Network entity 810 may be one or more of a base station, such as an evolved node B (eNB) or 5G or New Radio node B (gNB), a serving gateway, a server, and/or any other access node or combination thereof. Furthermore, network entity 810 and/or user equipment 820 may be one or more of a citizens broadband radio service device (CBSD).

Network entity 810 may further comprise at least one gNB-CU, which may be associated with at least one gNB-DU. The at least one gNB-CU and at least one gNB-DU may be in communication via at least one F1 interface, at least one Xₙ-C interface, and/or at least one NG interface via a 5GC.

User equipment 820 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof.

One or more of these devices may include at least one processor, respectively indicated as 811 and 821. Processors 811 and 821 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of devices indicated at 812 and 822. The memory may be fixed or removable. The memory may include computer program instructions or computer code contained therein. Memories 812 and 822 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory and which may be processed by the processors may be any suitable form of computer program code, for example, a compiled or interpreted computer program written in any suitable programming language. Memory may be removable or non-removable.

Processors 811 and 821 and memories 812 and 822 or a subset thereof, may be configured to provide means corresponding to the various blocks of FIGS. 1-7. Although not shown, the devices may also include positioning hardware, such as GPS or micro electrical mechanical system (MEMS) hardware, which may be used to determine a location of the device. Other sensors are also permitted and may be included to determine location, elevation, orientation, and so forth, such as barometers, compasses, and the like.

As shown in FIG. 8, transceivers 813 and 823 may be provided, and one or more devices may also include at least one antenna, respectively illustrated as 814 and 824. The device may have many antennas, such as an array of antennas configured for multiple input multiple output (MIMO) communications, or multiple antennas for multiple radio access technologies. Other configurations of these devices, for example, may be provided. Transceivers 813 and 823 may be a transmitter, a receiver, or both a transmitter and a receiver, or a unit or device that may be configured both for transmission and reception.

The memory and the computer program instructions may be configured, with the processor for the particular device, to cause a hardware apparatus such as user equipment to perform any of the processes described below (see, for example, FIGS. 1-7). Therefore, in certain embodiments, a non-transitory computer-readable medium may be encoded with computer instructions that, when executed in hardware, perform a process such as one of the processes described herein. Alternatively, certain embodiments may be performed entirely in hardware.

In certain embodiments, an apparatus may include circuitry configured to perform any of the processes or functions illustrated in FIGS. 1-7. For example, circuitry may be hardware-only circuit implementations, such as analog and/or digital circuitry. In another example, circuitry may be a combination of hardware circuits and software, such as a combination of analog and/or digital hardware circuit(s) with software or firmware, and/or any portions of hardware processor(s) with software (including digital signal processor(s)), software, and at least one memory that work together to cause an apparatus to perform various processes or functions. In yet another example, circuitry may be hardware circuit(s) and or processor(s), such as a microprocessor(s) or a portion of a microprocessor(s), that include software, such as firmware for operation. Software in circuitry may not be present when it is not needed for the operation of the hardware.

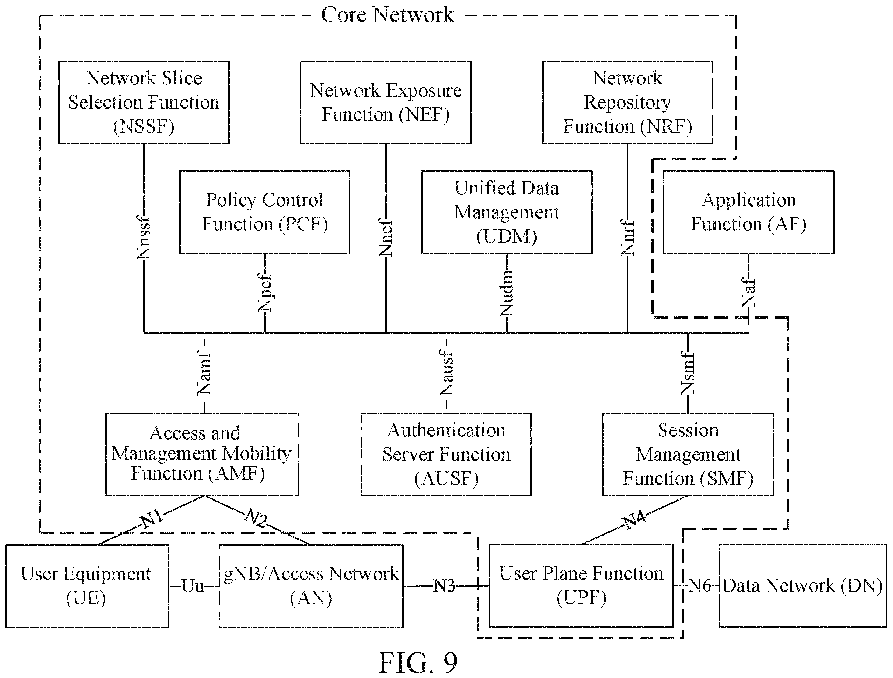

FIG. 9 illustrates an example of a 5G network and system architecture according to certain embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 9 may be similar to NE 810 and UE 820, respectively. The UPF may provide services such as intra-RAT and inter-RAT mobility, routing and forwarding of data packets, inspection of packets, user plane QoS processing, buffering of downlink packets, and/or triggering of downlink data notifications. The AF may primarily interface with the core network to facilitate application usage of traffic routing and interact with the policy framework.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present disclosure. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that certain embodiments discussed above may be practiced with procedures in a different order, and/or with hardware elements in configurations which are different than those which are disclosed. Therefore, it would be apparent to those of skill in the art that certain modifications, variations, and alternative constructions would be apparent, while remaining within the spirit and scope of the embodiments of the disclosure. In order to determine the metes and bounds of the embodiments of the disclosure, therefore, reference should be made to the appended claims.

| Partial Glossary | |
|---|---|
| 3GPP | Third Generation Partnership Project |
| 5G | Fifth Generation |
| 5GC | Fifth Generation Core |
| 5GS | Fifth Generation System |
| 5QI | Fifth Generation Quality of Service Indicator |
| ASIC | Application Specific Integrated Circuit |
| BS | Base Station |
| BSD | Bucket Size Duration |
| BSR | Buffer Status Report |
| CAPC | Channel Access Priority Class |
| CCCH | Common Control Channel |
| CE | Control Elements |
| CG | Configured Grant |
| CPU | Central Processing Unit |
| DCCH | Dedicated Control Channel |
| DMRS | Demodulation Reference Signal |
| DCI | Downlink Control Information |
| DL | Downlink |
| DRB | Data Radio Bearer |
| eMBB | Enhanced Mobile Broadband |
| eNB | Evolved Node B |
| EPS | Evolved Packet System |
| gNB | Next Generation Node B |
| GPS | Global Positioning System |
| HARQ | Hybrid Automatic Repeat Request |
| HARQ PID | Hybrid Automatic Repeat Request Process Identifier |
| HDD | Hard Disk Drive |
| IEEE | Institute of Electrical and Electronics Engineers |
| LBT | Listen Before Talk |
| LCH | Logical Channel |
| LCP | Logical Channel Prioritization |
| LTE | Long-Term Evolution |
| MAC | Medium Access Control |
| MCS | Modulation and Coding Scheme |
| MEMS | Micro Electrical Mechanical System |
| MIMO | Multiple Input Multiple Output |
| MME | Mobility Management Entity |
| NAS | Non-Access Stratum |
| NE | Network Entity |
| NG | Next Generation |
| NR | New Radio |
| NR-U | New Radio Unlicensed |
| OFDM | Orthogonal Frequency Division Multiplexing |
| PBR | Prioritized Bit Rate |
| PDA | Personal Digital Assistance |
| PDSCH | Physical Downlink Shared Channel |
| PDU | Protocol Data Unit |
| PQI | PC5 Quality of Service Identifier |
| PUSCH | Physical Uplink Shared Channel |
| QFI | Quality of Service Flow Identifier |
| QoS | Quality of Service |
| RAM | Random Access Memory |
| RAN | Radio Access Network |
| RRC | Radio Resource Control |
| SDU | Service Data Unit |
| SFN | System Frame Number |
| SR | Scheduling Report |
| SRB | Signaling Radio Bearer |
| TB | Transport Block |
| TR | Technical Report |
| TS | Technical Specification |
| Tx | Transmission |
| UCI | Uplink Control Information |
| UE | User Equipment |
| UL | Uplink |
| URLLC | Ultra-Reliable and Low-Latency Communication |
| WLAN | Wireless Local Area Network |

According to a first embodiment, a method may include receiving at least one configuration from at least one network entity. The method may further include evaluating at least one received uplink grant against at least one criterion associated with the at least one configuration. The method may further include starting at least one timer according to at least one selected configured grant timer value based on the at least one criterion.

In a variant, the at least one configuration may include one or more of at least one first CG timer value, at least one second CG timer value, and at least one criterion configured for timer value selection.

In a variant, the method may further include starting at least one timer according to the at least one selected configured grant timer value.

In a variant, the method may further include selecting one or more of the at least one configured grant timer values.

In a variant, the method may further include transmitting at least one physical uplink shared channel associated with at least one uplink grant to the at least one network entity.

According to a second embodiment, a method may include receiving at least one configuration from at least one network entity. The method may further include evaluating at least one operating status of at least one configured grant timer relating to at least one nominal hybrid automatic repeat request process according to the received at least one configuration. The method may further include initiating at least one nominal hybrid automatic repeat request process configured grant timer operating status-dependent action upon the operating status of the configured grant timer of the at least one nominal hybrid automatic repeat request process being evaluated as running. The method may further include evaluating at least one operating status of the CG timer of at least one backup HARQ process. The method may further include initiating at least one backup HARQ process CG timer operating status-dependent action. At least one medium access control (MAC) protocol data unit (PDU) may be generated and transmitted via at least one physical uplink shared channel (PUSCH) using the at least one backup HARQ process in response to determining that at least one operating status of the CG timer of at least one backup HARQ process is not running.

In a variant, the received at least one configuration may comprise information related to one or more of at least one nominal HARQ process and at least one backup HARQ process.

In a variant, the method may further include transmitting at least one physical uplink shared channel to the at least one network entity.

According to a third embodiment, a method may include receiving at least one mapping configuration from at least one network entity. The method may further include evaluating at least one operating status of at least one configured grant timer relating to at least one hybrid automatic repeat request process according to the received at least one mapping configuration. The method may further include initiating at least one hybrid automatic repeat request process configured grant timer operating status-dependent action. At least one existing transport block (TB) stored in a buffer of the at least one hybrid automatic repeat request process may be overwritten upon at least one new medium access control (MAC) protocol data unit (PDU).

In a variant, the at least one operating status of at least one configured grant timer may be associated with a total elapsed time the at least one configured grant timer has been running.

In a variant, the at least one new MAC PDU may comprise data from a first subset of at least one logical channel (LCH) between a first time and a second time.

In a variant, the at least one existing TB may be overwritten upon the at least one new MAC PDU containing data from either the first or a second subset of at least one LCH between the second time and a third time.

In a variant, the method may further include processing at least one configured grant occasion for at least one new transmission.

In a variant, the method may further include generating at least one transport block.

In a variant, the method may further include transmitting at least one physical uplink shared channel to the at least one network entity.

According to a fourth embodiment, a fifth embodiment, and a sixth embodiment, an apparatus can include at least one processor and at least one memory and computer program code. The at least one memory and the computer program code can be configured to, with the at least one processor, cause the apparatus at least to perform a method according to the first embodiment, the second embodiment, the third embodiment, and any of their variants.

According to a seventh embodiment, an eighth embodiment, and a ninth embodiment, an apparatus can include means for performing the method according to the first embodiment, the second embodiment, the third embodiment, and any of their variants.

According to a tenth embodiment, an eleventh embodiment, and a twelfth embodiment, a computer program product may encode instructions for performing a process including a method according to the first embodiment, the second embodiment, the third embodiment, and any of their variants.

According to a thirteenth embodiment, a fourteenth embodiment, and a fifteenth embodiment, a non-transitory computer-readable medium may encode instructions that, when executed in hardware, perform a process including a method according to the first embodiment, the second embodiment, the third embodiment, and any of their variants.

According to a sixteenth embodiment, a seventeenth embodiment, and an eighteenth embodiment, a computer program code may include instructions for performing a method according to the first embodiment, the second embodiment, the third embodiment, and any of their variants.

According to a nineteenth embodiment, a twentieth embodiment, and a twenty-first embodiment, an apparatus may include circuitry configured to perform a process including a method according to the first embodiment, the second embodiment, the third embodiment, and any of their variants.

## Claims

1. A method, comprising:
receiving at least one configuration from at least one network entity;
evaluating at least one received uplink grant or at least one physical uplink shared channel of the at least one received uplink grant against at least one criterion associated with the at least one configuration; and
selecting at least one timer value based on the evaluation.

2. The method of claim 1, wherein the at least one timer value is associated to a configured grant (CG) timer or a configured grant re-transmission timer.

3. The method of claims 1 or 2, wherein the at least one configuration may include one or more of: at least one first configured grant timer value, at least one second configured grant timer value.

4. The method of any of claims 1-3, further comprising:
starting at least one timer according to the at least one selected configured grant timer value.

5. The method of any of claims 1-3, further comprising:
transmitting at least one physical uplink shared channel associated with the at least one uplink grant to the at least one network entity.

6. The method of any of claims 1-5, wherein the at least one criterion comprises one or more of: at least one grant priority level, at least one logical channel priority, at least one grant parameter, and data carried by at least one physical uplink shared channel.

7. The method of any of claims 1-6, wherein the evaluating comprises evaluating the at least one received uplink grant based on at least one logical channel priority.

8. An apparatus, comprising:
means for receiving at least one configuration from at least one network entity;
means for evaluating at least one received uplink grant or at least one physical uplink shared channel of the at least one received uplink grant against at least one criterion associated with the at least one configuration; and
means for selecting at least one timer value based on the evaluation.

9. The apparatus of claim 8, wherein the at least one timer value is associated to a configured grant timer or a configured grant re-transmission timer.

10. The apparatus of claims 8 or 9, wherein the at least one configuration may include one or more of: at least one first configured grant timer value, at least one second configured grant timer value.

11. The apparatus of any of claims 8-10, comprising:
means for starting at least one timer according to the at least one selected configured grant timer value.

12. The apparatus of any of claims 8-11, comprising:
means for transmitting at least one physical uplink shared channel associated with at least one uplink grant to the at least one network entity.

13. The apparatus of any of claims 8-12, wherein the at least one criterion comprises one or more of: at least one grant priority level, at least one logical channel priority, at least one grant parameter, and data carried by at least one physical uplink shared channel.

14. The apparatus of any of claims 8-13, wherein the means for evaluating comprises means for evaluating the at least one received uplink grant based on at least one logical channel priority.

15. A computer readable medium comprising program instructions stored thereon for performing the method according to any of claims 1-7.
